# EUROPEAN PATENT APPLICATION

(11) **EP 4 775 171 A1**
(43) Date of publication of application: **15.07.2026**
(21) Application number: 25227468.3
(22) Date of filing: 29.12.2025
(51) Int. Cl.: A61C 1/12, A61C 1/18, F16C 37/00

(54) **DENTAL HANDPIECE**

(30) Priority: 09.01.2025 JP 2025003759; 04.11.2025 JP 2025185884
(71) Applicant: Nakanishi Inc., Kanuma-shi, Tochigi 322-8666 (JP)
(72) Inventor: SHIOKAWA, Sota, Tochigi, 3228666 (JP); HIGASHI, Masahiro, Tochigi, 3228666 Japan (JP); HARIKAE, Yusuke, Tochigi, 3228666 Japan (JP)
(74) Representative: Lewis Silkin LLP

(57) **Abstract**

A dental handpiece 100 includes a head portion 11 configured to rotationally drive, about a central axis of a dental treatment tool 15, a bur sleeve 17 that detachably holds the dental treatment tool 15. The bur sleeve 17 is rotatably supported in a housing 31 of the head portion 11 via a rolling bearing 61. The rolling bearing 61 includes an inner ring 63 that supports the bur sleeve 17, an outer ring 65 that is fixed to the housing 31, and a plurality of rolling elements 67 disposed between the inner ring 63 and the outer ring 65. A flow path R2b of a cooling medium that communicates in an axial direction is provided on an outer circumferential surface of the outer ring 65 or inside the outer ring 65.

## Description

### TECHNICAL FIELD

The present disclosure is related to a dental handpiece.

### BACKGROUND ART

Dental handpieces for cutting teeth and the like are disclosed, for example, in JP 2021-016621 A and WO 2020/115233 A1. In a dental handpiece, a rotor of a head portion is rotated at high speed, and an affected portion is cut by a dental treatment tool chucked to the rotor. In such a dental handpiece, as the rotational speed of the rotor increases, a gear and rolling elements of a rolling bearing may generate heat due to friction or the like, and this heat may be conducted to thereby heat the head portion. Therefore, in order to suppress a temperature increase of the head portion, a dental handpiece is provided with a cooling structure and a heat insulating structure.

JP 2021-016621 A discloses that a flow path for air flowing inside the head portion is limited by a plurality of O-rings, and air is discharged through the inside of a rolling bearing so that the rolling bearing is cooled. WO 2020/115233 A1 discloses a structure in which, in the head portion, an inner contact element and an outer cover plate are thermally insulated by providing, between them, a heat insulating layer that is an air layer, thereby keeping an increase in surface temperature of a push button within an allowable range.

### SUMMARY OF INVENTION

The heat generation of the rolling bearing caused by friction and the like as described above is transmitted particularly from an outer ring constituting the rolling bearing to a housing of the head portion. Therefore, in order to suppress a temperature increase of the head portion, it is desirable to actively cool the outer ring.

However, in the structure described in JP 2021-016621 A, the rolling bearing is cooled by air flowing through the flow path, but there is still room for improvement in terms of suppressing the temperature increase of the head portion. Further, in the structure described in WO 2020/115233 A1, heat conduction from the inner contact element to the outer cover plate is suppressed by the heat insulating layer, but it is difficult to suppress a temperature increase of the head portion due to heat of the rolling bearing.

Accordingly, one of objects of the present disclosure is to provide a dental handpiece capable of actively cooling the outer ring of a rolling bearing to suppress a temperature increase of a head portion.

A dental handpiece according to the present disclosure has the following configuration.

A dental handpiece including a head portion configured to rotationally drive, about a central axis of a dental treatment tool, a bur sleeve that detachably holds the dental treatment tool,
wherein the bur sleeve is rotatably supported in a housing of the head portion via a rolling bearing,
wherein the rolling bearing includes an inner ring that supports the bur sleeve, an outer ring that is fixed to the housing, and a plurality of rolling elements disposed between the inner ring and the outer ring, and
wherein a flow path of a cooling medium that communicates in an axial direction is provided on an outer circumferential surface of the outer ring or inside the outer ring.

According to thus configured dental handpiece, the outer ring of the rolling bearing can be actively cooled, and thus a temperature increase of the head portion can be suppressed.

### BRIEF DESCRIPTION OF DRAWINGS

FIG. 1 is an overall view of a dental handpiece according to a first embodiment.
FIG. 2 is a schematic cross-sectional view of a head portion of the dental handpiece shown in FIG. 1, taken along an axial direction.
FIG. 3 is an exploded perspective view of an essential part of the head portion.
FIG. 4 is a schematic cross-sectional view of the head portion taken along the axial direction, showing a flow of a cooling medium.
FIG. 5 is a cross-sectional view taken along line V-V of FIG. 4.
FIG. 6 is an exploded perspective view of a spring receiving member and a bearing retainer member.
FIG. 7 is a schematic cross-sectional view, taken along an axial direction, of a head portion of a dental handpiece according to a second embodiment.
FIG. 8 is a perspective view of an outer ring of a rolling bearing.
FIG. 9 is a perspective view of an outer ring of a rolling bearing according to Modification 1.
FIG. 10 is a perspective view of an outer ring of a rolling bearing according to Modification 2.
FIG. 11 is a schematic cross-sectional view, taken along an axial direction, of a head portion of a dental handpiece including a rolling bearing having the outer ring according to Modification 2.
FIG. 12 is a schematic cross-sectional view, taken along an axial direction, of a head portion of a dental handpiece according to a third embodiment.
FIG. 13 is a perspective view of a lower ring.
FIG. 14 is a perspective view of an upper ring constituting a spring receiving member.
FIG. 15 is an exploded perspective view of a lower ring and an upper ring according to a modification of the third embodiment of the dental handpiece.
FIG. 16 is a perspective view, viewed from below, showing a state in which the rolling bearing is sandwiched between the lower ring and the upper ring.
FIG. 17 is a perspective view of the upper ring viewed from below.
FIG. 18 is a schematic cross-sectional view, taken along an axial direction, of a head portion of a dental handpiece according to a fourth embodiment.
FIG. 19 is a schematic cross-sectional view, taken along an axial direction, of a head portion of a dental handpiece according to a fifth embodiment.
FIG. 20 is a bottom perspective view showing a spring receiving member.
FIG. 21 is a top perspective view of a bearing retainer member.

### DESCRIPTION OF EMBODIMENTS

Hereinafter, embodiments of a dental handpiece according to the present disclosure will be described in detail with reference to the drawings. An example configuration of a contra-angle type handpiece will be described here, but the configuration may alternatively be one including another drive mechanism such as an air turbine type handpiece that is rotated by the supply of air.

### (First Embodiment)

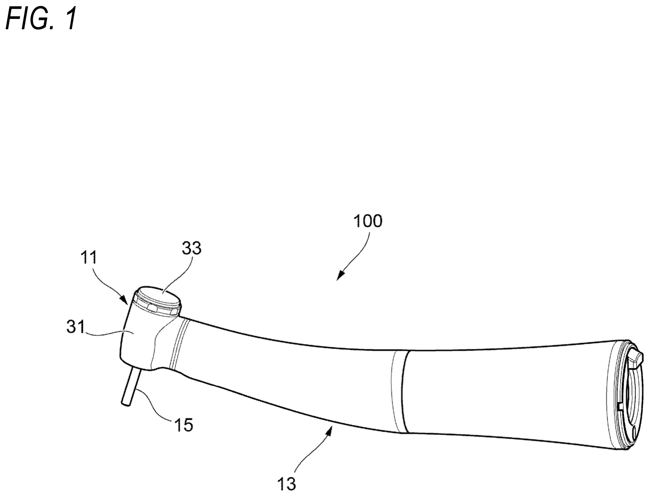

FIG. 1 is an overall view of a dental handpiece 100 according to a first embodiment of the present disclosure. The dental handpiece 100 includes a head portion 11 and a grip portion 13 extending rearward from the head portion 11. The head portion 11 has a housing 31 that is connected to the grip portion 13 and covers an outer periphery of the head portion 11, and a push button 33 that covers an upper portion of the housing 31.

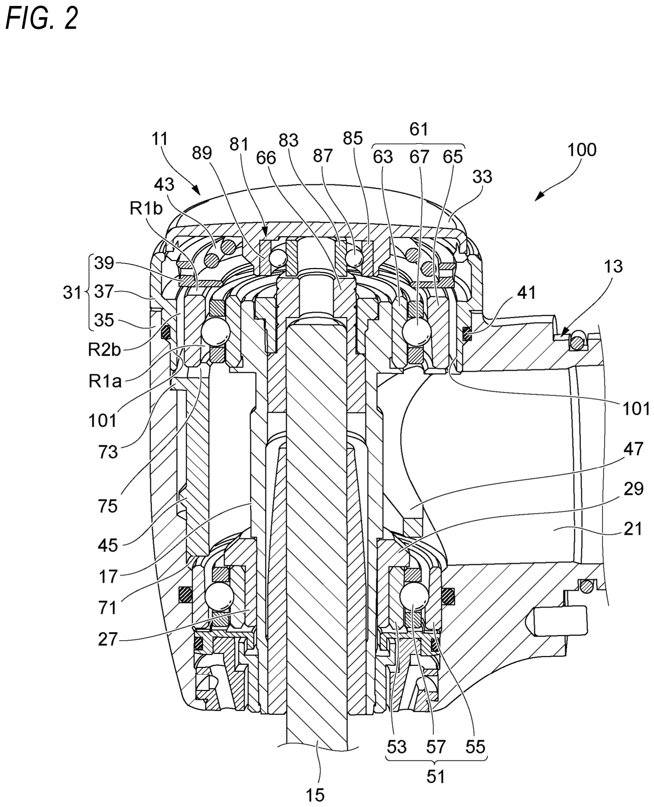

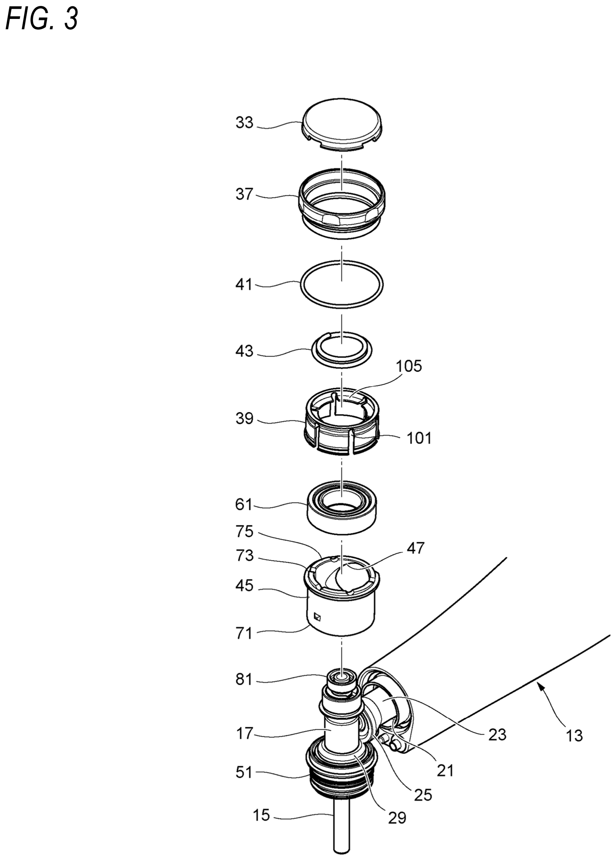

FIG. 2 is a schematic cross-sectional view of the head portion 11 of the dental handpiece 100 shown in FIG. 1, taken along the axial direction. FIG. 3 is an exploded perspective view of an essential part of the head portion 11. In the following description, an insertion/removal direction of a dental treatment tool 15 when the dental treatment tool 15 is attached to the head portion 11 is referred to as an up-down direction or an insertion direction, a front side in the insertion direction is referred to as an upper side, and a rear side in the insertion direction is referred to as a lower side.

As shown in FIGS. 2 and 3, the head portion 11 includes a bur sleeve 17 that detachably holds the dental treatment tool 15. The grip portion 13 has an insertion passage 21, and a rotary shaft 23 (FIG. 3) is inserted through the insertion passage 21. The rotary shaft 23 is rotationally driven by a drive unit such as a motor (not shown) provided at a rear end of the grip portion 13. A gear 25 is provided at an end of the rotary shaft 23 on the head portion 11 side. The gear 25 meshes with a gear 29 of a gear sleeve 27 fixed to a lower end of the bur sleeve 17 as shown in FIG. 2. When the rotary shaft 23 is rotationally driven, the rotation is transmitted to the bur sleeve 17 via the gears 25 and 29, and the dental treatment tool 15 mounted to the bur sleeve 17 is rotationally driven about its central axis. Note that the rotational drive method is not limited to the above-described motor drive, and may be an air turbine method in which rotation is caused by supply of air.

The housing 31 includes a housing main body 35, a head cap 37 attached to an upper portion of the housing main body 35, and a spring receiving member 39 fitted on an inner peripheral side of the head cap 37. The housing main body 35 and the head cap 37 are hermetically sealed by an O-ring 41. A biasing spring 43 for biasing the push button 33 upward is provided between the spring receiving member 39 and the push button 33.

A tubular bearing retainer member 45 is fixed inside the housing main body 35. An opening 47 that communicates with the insertion passage 21 of the grip portion 13 is formed in a side surface of the bearing retainer member 45.

The above-described bur sleeve 17 is provided inside the bearing retainer member 45 along the axial direction. A rolling bearing 51 is disposed at a lower end side (insertion/removal side of the dental treatment tool 15) of the bur sleeve 17, and a rolling bearing 61 is disposed at an opposite upper end side. The rolling bearing 51 at the lower end side includes an inner ring 53, an outer ring 55, and a plurality of rolling elements 57 disposed in a rollable manner between the inner ring 53 and the outer ring 55. Similarly, the rolling bearing 61 at the upper end side includes an inner ring 63, an outer ring 65, and a plurality of rolling elements 67 disposed in a rollable manner between the inner ring 63 and the outer ring 65.

In the rolling bearing 51 at the lower end side of the bur sleeve 17, the outer ring 55 is fitted and fixed to an inner peripheral surface of the housing 31, and the bur sleeve 17 is fixed to the inner ring 53 via the gear sleeve 27. In the rolling bearing 61 at the upper end side of the bur sleeve 17, an outer peripheral surface of the outer ring 65 is fitted and fixed to an inner peripheral surface of the spring receiving member 39, and the inner ring 63 is fixed to an outer peripheral surface of an upper end of the bur sleeve 17. Thus, the bur sleeve 17 is rotatably supported at its upper and lower ends in the head portion 11 by the rolling bearings 51 and 61.

An upper portion of the spring receiving member 39 is provided with an upper flange portion 105 (FIG. 3) that projects radially inward. The upper flange portion 105 abuts an upper end face of the outer ring 65 of the rolling bearing 61.

An upper portion of the bearing retainer member 45 is provided with a lower flange portion 73 that projects radially outward, and an annular protruding portion 75 (FIG. 3) that projects upward. The annular protruding portion 75 abuts a lower end face of the outer ring 65 of the rolling bearing 61. The upper flange portion 105 of the spring receiving member 39 and the annular protruding portion 75 of the bearing retainer member 45 sandwich the rolling bearing 61 in the up-down direction.

An end sleeve 66, against which an upper end of the dental treatment tool 15 is pressed, is fixed to an inner peripheral side of the upper end of the bur sleeve 17. A rolling bearing 81 is provided between the upper end of the bur sleeve 17 and the push button 33. The rolling bearing 81 includes an inner ring 83, an outer ring 85, and a plurality of rolling elements 87 disposed in a rollable manner between the inner ring 83 and the outer ring 85. The outer ring 85 of the rolling bearing 81 is fitted and fixed in a recess 89 formed in the push button 33, and an end face of the inner ring 83 abuts an upper end face of the end sleeve 66. That is, the bur sleeve 17 is rotatable relative to the push button 33.

Inside the head portion 11 having the above-described configuration, a flow path for a cooling medium is formed to suppress a temperature increase of the head portion 11.

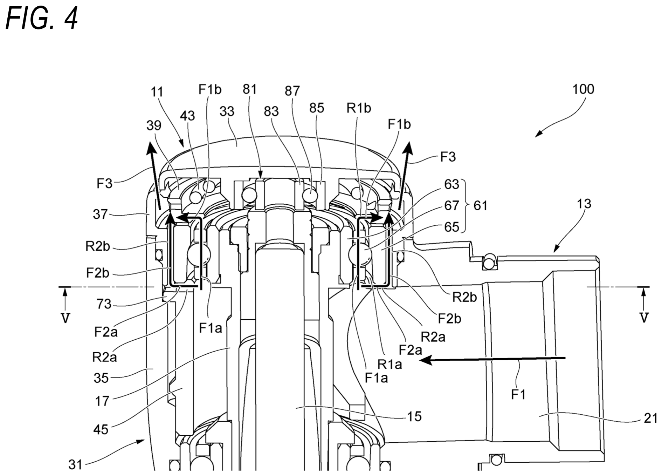

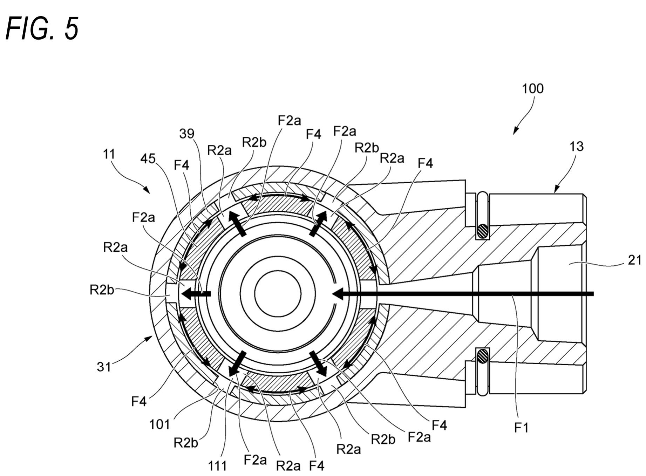

FIG. 4 is a schematic cross-sectional view of the head portion 11 taken along the axial direction, showing a flow of a cooling medium. FIG. 5 is a sectional view in the direction of arrows taken along line V-V of FIG. 4. In the head portion 11 having the present configuration, a cooling medium is supplied from the insertion passage 21 of the grip portion 13 in a direction indicated by an arrow F1 by a pump unit (not shown) or the like. The cooling medium is, for example, a gas such as air, and in the following description, the cooling medium will be referred to as "cooling air".

The cooling air supplied to the inside of the bearing retainer member 45 of the head portion 11 flows upward in a flow path R1a (arrow F1a) through an interior of the rolling bearing 61, and in a flow path R2a (arrow F2a) extending radially outward along the lower end face of the outer ring 65 of the rolling bearing 61, as will be described in detail below, thereby flowing toward an upper side of the head portion 11. Further, there is also a flow path in which the cooling air flows toward a lower side of the head portion 11 through the interior of the rolling bearing 51 (FIG. 2) or the like. In this specification, a flow path of the cooling air in the rolling bearing 61 at the upper end side of the bur sleeve 17 will be described. However, as necessary, the rolling bearing 51 at the lower end side may also be provided with the same configuration as that of the rolling bearing 61 at the upper end side to form a cooling flow path.

The cooling air that has passed through the interior of the rolling bearing 61 in the flow path R1a flows radially outward through a flow path R1b along the upper end face of the outer ring 65 of the rolling bearing 61 (arrow F1b). Further, the cooling air that has reached a radially outer side in the flow path R2a flows upward through a flow path R2b along an outer peripheral surface of the outer ring 65 of the rolling bearing 61 (arrow F2b). Then, the cooling air flowing from the flow paths R1b and R2b is discharged to the outside of the head portion 11 from a gap between the head cap 37 and the push button 33 (arrow F3). In the present configuration, the flow path R2b provided on the outer periphery of the outer ring 65 serves as a ventilation path of the cooling air, so that a wide range of the outer peripheral surface of the outer ring 65 can be evenly cooled.

The above-described flow path R1a and the flow paths R2a and R2b are formed by the spring receiving member 39 in which the outer ring 65 of the rolling bearing 61 is fixed on an inner side, and the bearing retainer member 45 that sandwiches the rolling bearing 61 together with the spring receiving member 39.

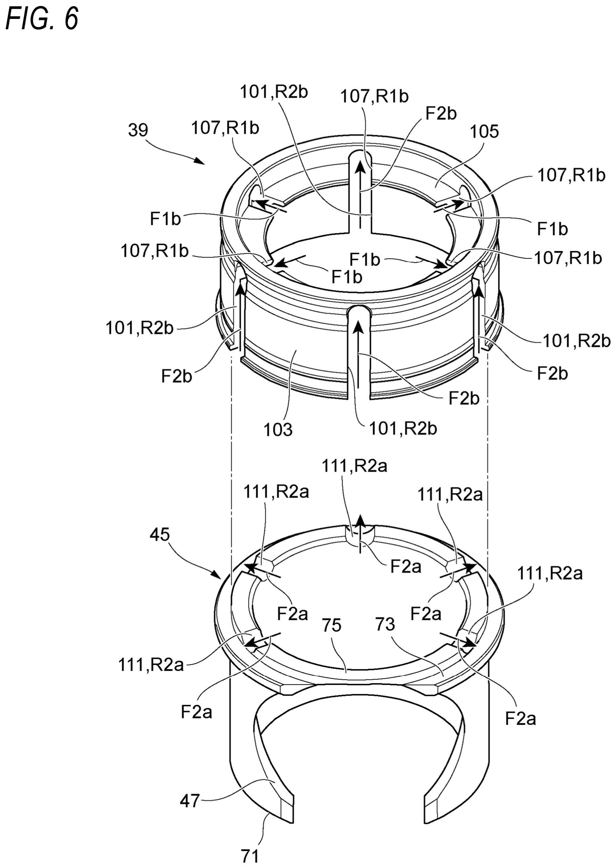

FIG. 6 is an exploded perspective view of the spring receiving member 39 and the bearing retainer member 45. The spring receiving member 39 includes a ring portion 103 formed in a cylindrical shape, and the upper flange portion 105 described above, which is a spring receiving portion projecting radially inward at an upper end of the ring portion 103. The above-described flow path R2b is formed by side slits 101 that are notched portions of a side surface of the ring portion 103 of the spring receiving member 39. The side slits 101 are notch grooves formed from a lower end of the ring portion 103 up to near an upper end along the axial direction. The side slits 101 are provided at a plurality of positions (six positions in this example) in a circumferential direction of the spring receiving member 39, preferably at equal intervals. The side slits 101 constitute, along the axial direction, a flow path (axial ventilation path) R2b.

In the upper flange portion 105, ventilation slits 107 are formed at circumferentially same positions as the side slits 101, respectively, and the ventilation slits 107 divide the upper flange portion 105 in the circumferential direction. The ventilation slits 107 are connected to the side slits 101 and constitute, along the radial direction at the upper end face of the outer ring 65, a flow path (radial ventilation path) R1b.

On the other hand, a plurality of ventilation grooves 111 are formed in the annular protruding portion 75 of the bearing retainer member 45 along the radial direction. These ventilation grooves 111 are connected to an annular gap formed between the lower flange portion 73 and an outer ring (not shown) along the lower flange portion 73, and are connected to the side slits 101 of the spring receiving member 39. The ventilation grooves 111 constitute, along the radial direction at the lower end face of the outer ring 65, a flow path (radial ventilation path) R2a.

According to the above-described flow path configuration, the cooling air supplied, in the direction of arrow F1 shown in FIG. 4, to a space between the inside of the bearing retainer member 45 and the bur sleeve 17 flows, toward the upper side of the head portion 11, through the interior of the rolling bearing 61, along the above-described arrow F1a. Together therewith, as shown, for example, by five arrows F2a in FIGS. 5 and 6, the cooling air flows along the lower end face of the outer ring 65 of the rolling bearing 61 and the bearing retainer member 45 while diffusing in the circumferential direction (arrow F4 in FIG. 5), and further flows along the plurality (five in this example) of ventilation grooves 111 that communicate in the radial direction. In FIG. 5, the ventilation grooves 111 and the side slits 101 are disposed at the same positions in the circumferential direction, but their positions may be shifted in the circumferential direction.

The cooling air flowing radially outward from the ventilation grooves 111 flows into an annular gap along the lower flange portion 73 in the circumferential direction and diffuses therein, and flows upward through the flow path R2b formed by the side slits 101 of the spring receiving member 39. The cooling air that has flowed upward flows, together with the flow along the arrow F1a, radially outward from the upper end face of the outer ring 65. Thus, the supplied cooling air is discharged to the outside through the gap between the head cap 37 and the push button 33 constituting the housing 31 (see arrow F3 in FIG. 4).

According to the dental handpiece 100 of the first embodiment described above, since the cooling air, as the cooling medium, flows through the flow path R2b provided on the outer circumferential side of the outer ring 65 of the rolling bearing 61, the outer ring 65 that generates heat by rotating at high speed can be actively cooled. Accordingly, a temperature increase of the head portion 11 due to heat conduction from the rolling bearing 61 can be suppressed. That is, since the flow path of the cooling medium that communicates in the axial direction is provided also on the outer circumferential side of the outer ring 65 of the rolling bearing 61, the outer ring 65, which has a relatively large heat capacity, is cooled and heat conduction from the rolling bearing 61 to the head portion 11 can be efficiently suppressed.

Further, the flow path R2b is formed by the side slits 101 formed in the spring receiving member 39 that fixes the outer ring 65. Therefore, a flow path R2b formed by the side slits 101 on the outer circumferential side of the outer ring 65 can be easily formed simply by fitting the outer ring 65 of the rolling bearing 61 into the inner peripheral surface of the spring receiving member 39.

Moreover, the flow path R2b formed by a plurality of side slits 101 is provided at intervals in the circumferential direction of the outer ring 65, and the cooling air is allowed to flow through each flow path R2b, so that the outer peripheral surface of the outer ring 65 can be evenly cooled over a wide range. As a result, the temperature increase of the head portion 11 can be efficiently suppressed. In addition, by setting the arrangement interval of the flow paths R2b in the circumferential direction to an equal interval, a more uniform cooling effect can be obtained.

Further, since the ventilation slits 107 are formed in the upper flange portion 105 of the spring receiving member 39 at circumferentially same positions as the side slits 101, the cooling air flowing through the ventilation slits 107 can smoothly flow radially outward, and thereby the upper end face of the outer ring 65 can be efficiently cooled.

Furthermore, since the ventilation grooves 111 communicating in the radial direction are formed in the bearing retainer member 45 that supports the lower end face of the outer ring 65, the lower end face of the outer ring 65 can also be cooled by the cooling air flowing through the ventilation grooves 111. Thus, the rolling bearing 61 can be uniformly cooled.

Note that a part of the cooling air supplied to the head portion 11 flows toward the lower side of the head portion 11, passes between the inner ring 53 and the outer ring 55 of the rolling bearing 51 at the lower side that rotates at high speed, and is discharged from a lower end of the head portion 11. The rolling bearing 51 at the lower side is also cooled by this flow of cooling air, so that a temperature increase of the head portion 11 can be efficiently suppressed.

Next, dental handpieces according to second to fourth embodiments will be described. In the following descriptions of the respective embodiments, portions having the same configuration as those of the first embodiment are denoted by the same reference numerals, and explanation thereof will be omitted or simplified.

### (Second Embodiment)

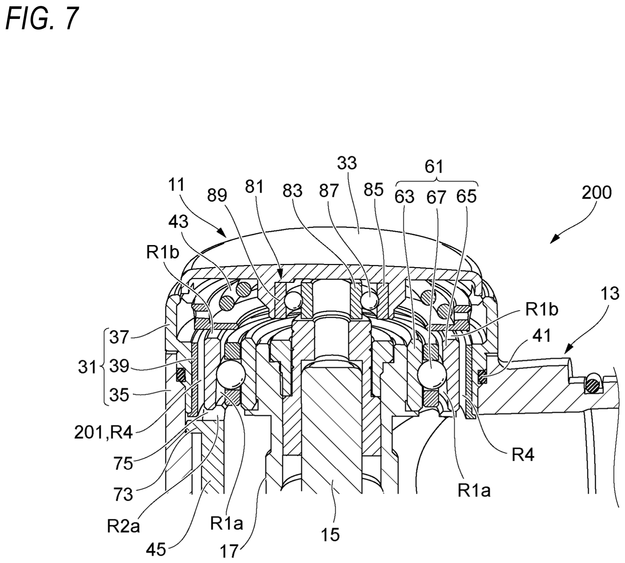

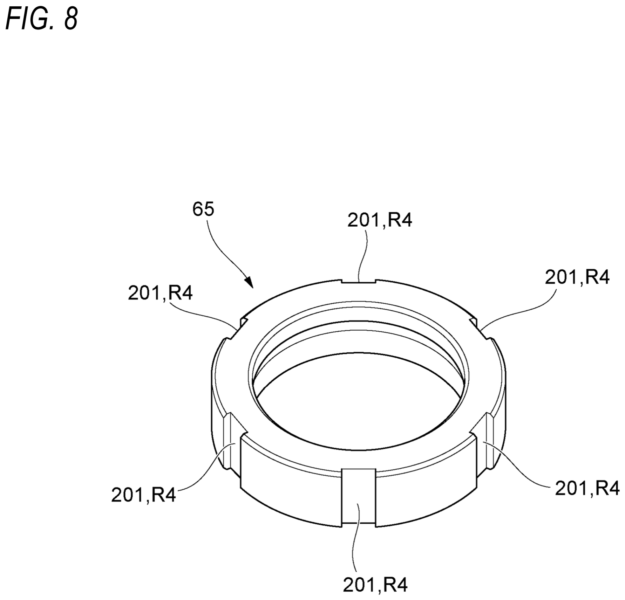

FIG. 7 is a schematic cross-sectional view, taken along an axial direction, of the head portion 11 of a dental handpiece 200 according to a second embodiment. FIG. 8 is a perspective view of the outer ring 65 of the rolling bearing 61.

In the dental handpiece 200 according to the second embodiment shown in FIGS. 7 and 8, an outer ring groove portion 201 is formed in the outer ring 65 of the rolling bearing 61, and a spring receiving member 39 having no side slits 101 as shown in FIG. 6 is mounted. Other than this point, the configuration is the same as that of the first embodiment described above.

As shown in FIG. 8, in the outer ring 65 of this embodiment, a plurality of outer ring groove portions 201 are provided at intervals in the circumferential direction. Each outer ring groove portion 201 is formed from a lower end to an upper end along the axial direction on the outer peripheral surface of the outer ring 65. These outer ring groove portions 201 form, on an outer circumferential side of the outer ring 65, a flow path R4 along the axial direction (axial ventilation path). Preferably, the outer ring groove portions 201 are provided at equal intervals in the circumferential direction.

The dental handpiece 200 is also provided with the bearing retainer member 45 having the ventilation grooves 111 that form the flow path R2a. The ventilation grooves 111 of the bearing retainer member 45 are connected, on a radially outer side, to an annular gap along the lower flange portion 73 and communicate with the outer ring groove portions 201.

In this dental handpiece 200, a part of the cooling air flowing upward in the head portion 11 passes through the flow path R2a formed by the ventilation grooves 111 in the lower flange portion 73 of the bearing retainer member 45. Then, the cooling air that has passed through the flow path R2a passes through the flow path R4 constituted by the outer ring groove portions 201 formed on the outer peripheral surface of the outer ring 65, further passes through the ventilation slits 107 (FIG. 6) of the spring receiving member 39, and is discharged to an outer circumferential side at an upper portion of the outer ring 65 (arrow F3 in FIG. 4).

Further, another part of the cooling air flowing upward in the head portion 11 flows upward through the interior between the inner ring 63 and the outer ring 65 of the rolling bearing 61, passes through the flow path R1b constituted by the ventilation slits 107 formed in the upper flange portion 105 of the spring receiving member 39 shown in FIG. 6, and is discharged to the outer circumferential side at the upper portion of the outer ring 65 (arrow F3 in FIG. 4).

According to the dental handpiece 200 of the second embodiment described above, the cooling air as the cooling medium is allowed to flow through the flow path R4 constituted by the outer ring groove portions 201 formed on the outer peripheral surface of the outer ring 65 of the rolling bearing 61. Thus, the rolling bearing 61 can be actively cooled, and a temperature increase of the head portion 11 due to heat conduction from the rolling bearing 61 can be suppressed. Further, by providing the flow path in the outer ring 65 itself, the contact area between the surface of the outer ring 65 and the cooling air can be increased, thereby improving cooling efficiency.

Note that the outer ring groove portions 201 formed on the outer peripheral surface of the outer ring 65 are not limited to straight grooves formed in the vertical direction. Hereinafter, modified examples of the outer ring 65 having outer ring groove portions 201 of other shapes will be described.

### (Modification 1)

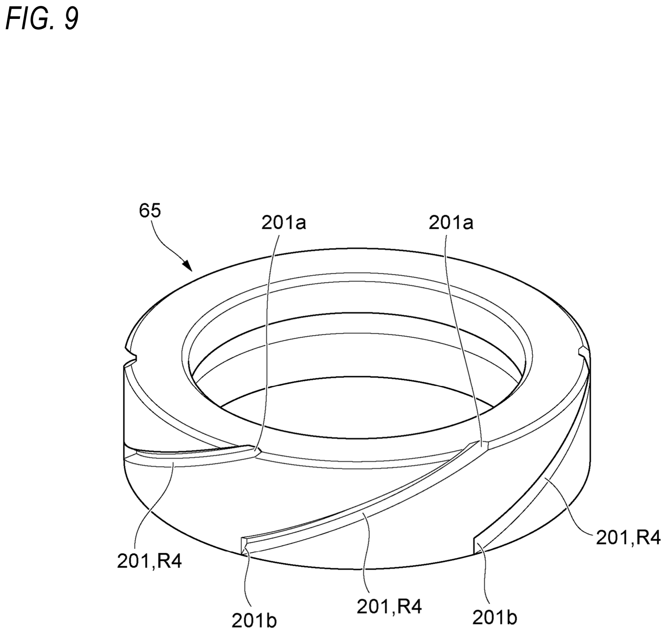

FIG. 9 is a perspective view of the outer ring 65 of the rolling bearing 61 according to Modification 1. In Modification 1 shown in FIG. 9, a plurality of outer ring groove portions 201 formed on the outer peripheral surface of the outer ring 65 are inclined grooves formed so as to be inclined from the axial direction toward the circumferential direction. An upper end 201a of each outer ring groove portion 201 may extend, for example, to a circumferential position substantially on the same axis as a lower end 201b of an adjacent outer ring groove portion 201. By forming such outer ring groove portions 201 constituted by inclined grooves on the outer peripheral surface of the outer ring 65, the outer ring 65 can be more uniformly cooled in the circumferential direction by the cooling air flowing through the flow path R4 of each outer ring groove portion 201.

### (Modification 2)

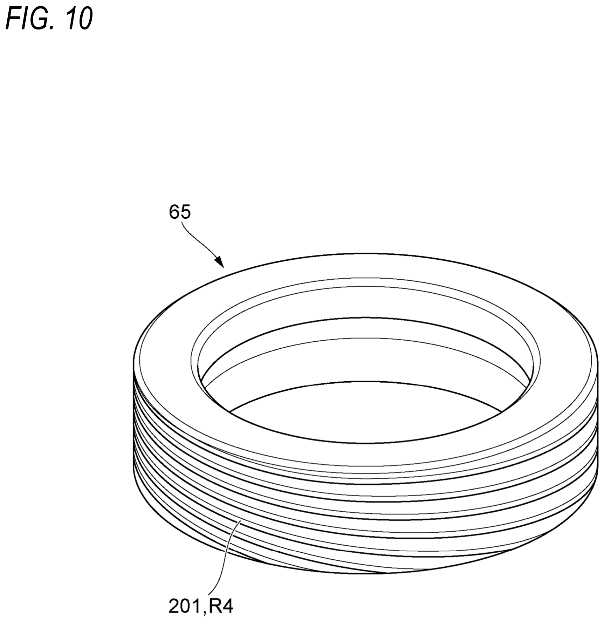

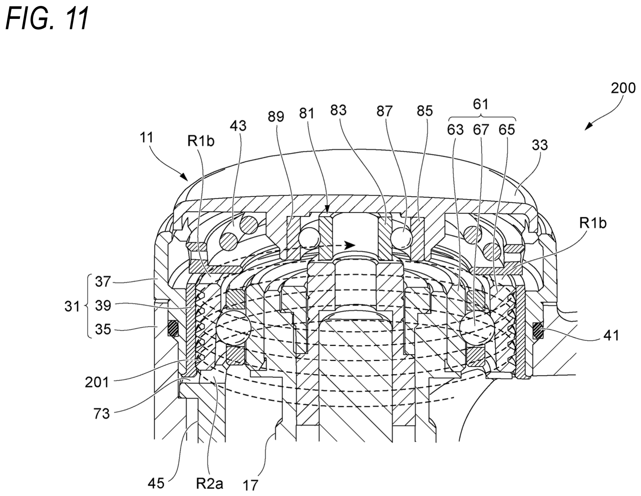

FIG. 10 is a perspective view of the outer ring 65 of the rolling bearing 61 according to Modification 2. FIG. 11 is a schematic cross-sectional view, taken along an axial direction, of the head portion 11 of the dental handpiece 200 provided with the rolling bearing 61 having the outer ring 65 according to Modification 2.

In Modification 2 shown in FIG. 10, a spiral outer ring groove portion 201 having the center axis of the outer ring 65 as the axial direction is formed on the outer peripheral surface of the outer ring 65. Accordingly, a spiral flow path R4 continuous in the circumferential direction is provided along the axial direction on the entire outer periphery of the outer ring 65. The outer ring groove portion 201 may be a single groove or a multi-start groove of two or more grooves. In Modification 2, by providing the spiral flow path R4 continuously over the entire circumference of the outer ring 65, as schematically shown by broken lines in FIG. 11 as the flow of the cooling air, the cooling air flows in a spiral form multiple times on the outer circumferential side of the outer ring 65. Thus, the cooling area of the outer ring 65 can be increased, and the outer ring 65 can be cooled more uniformly and efficiently in the circumferential direction.

### (Third Embodiment)

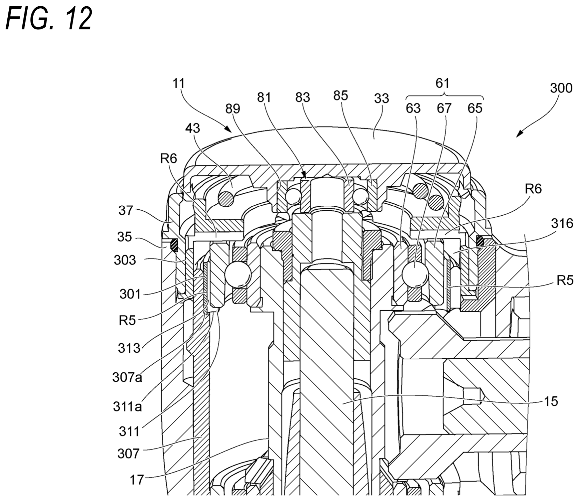

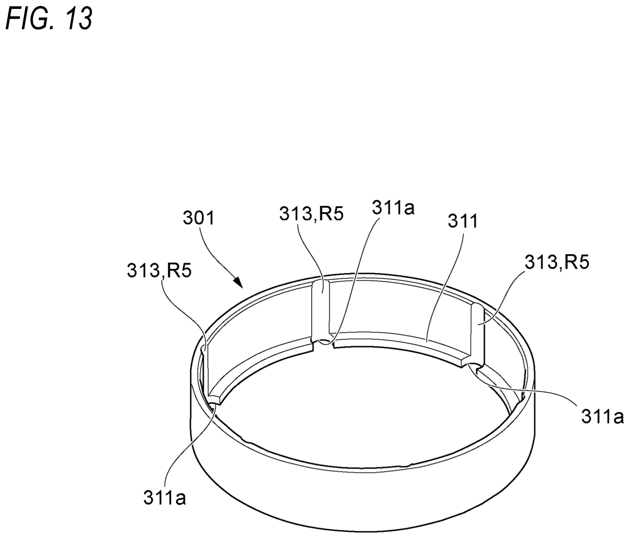

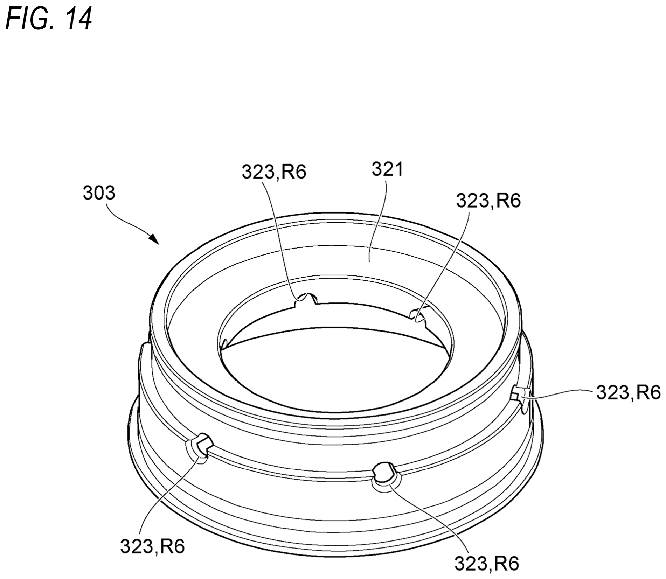

FIG. 12 is a schematic cross-sectional view, taken along an axial direction, of the head portion 11 of a dental handpiece 300 according to a third embodiment. FIG. 13 is a perspective view of a lower ring 301. FIG. 14 is a perspective view of an upper ring 303 constituting a spring receiving member.

In the dental handpiece 300 according to the third embodiment shown in FIG. 12, a lower ring 301 and an upper ring 303 as a spring receiving member are provided. The lower ring 301 is mounted on the outer ring 65 of the upper rolling bearing 61 from a lower side and supports a lower end face of the outer ring 65. The upper ring 303 is mounted on the outer ring 65 of the rolling bearing 61 from an upper side. The dental handpiece 300 further includes a bearing retainer member 307 extending in an up-down direction so as to cover an outer periphery of the rolling bearing 61. An upper end of the bearing retainer member 307 is inserted between the lower ring 301 and the upper ring 303, and supports the lower ring 301 by a stepped portion 307a.

As shown in FIG. 13, the lower ring 301 has, at a lower end thereof, a lower flange portion 311 projecting radially inward and abutting a lower end face of the outer ring 65 of the rolling bearing 61. On an inner peripheral surface of the lower ring 301, a plurality of side slits 313 for reducing thickness in the radial direction are formed. These side slits 313 extend in the up-down direction from the lower flange portion 311 at the lower end to an upper end, and are provided at a plurality of positions with intervals in the circumferential direction. The side slits 313 constitute a flow path R5 serving as an axial ventilation path between the side slits 313 and the outer peripheral surface of the outer ring 65. Notches 311a are formed in the lower flange portion 311 at positions corresponding to the side slits 313.

As shown in FIG. 14, the upper ring 303 has, at an upper portion thereof, an upper flange portion 321 serving as a spring receiving portion projecting radially inward. A biasing spring 43 that biases the push button 33 upward shown in FIG. 12 is disposed on an upper surface of the upper flange portion 321, and an upper end face of the outer ring 65 abuts a lower surface of the upper flange portion 321. On a lower side of the upper flange portion 321, ventilation slits 323 communicating radially inward and outward are formed at a plurality of positions along the circumferential direction. These ventilation slits 323 constitute a flow path R6 serving as a radial ventilation path along the radial direction at the upper end face of the outer ring 65.

In this dental handpiece 300, a part of the cooling air flowing upward to the head portion 11 shown in FIG. 12 flows through the flow path R5 formed by the side slits 313 of the lower ring 301 provided on the outer circumferential side of the outer ring 65, passes through a gap 316 formed along the circumferential direction at an upper portion of the outer ring 65, and is discharged to an outer circumferential side through the flow path R6. The gap 316 is an annular gap along the circumferential direction of the lower ring 301 formed between the spring receiving member (upper ring 303) as the housing and the lower ring 301. This annular gap is connected to the side slits 313, which serve as the axial ventilation paths constituting the flow path R5 of the lower ring 301.

Another part of the cooling air flowing upward in the head portion 11 flows through the interior between the inner ring 63 and the outer ring 65 of the rolling bearing 61 toward an upper end side of the rolling bearing 61, and is discharged to an outer circumferential side at an upper portion of the outer ring 65 through the flow path R6 formed by the ventilation slits 323 of the upper flange portion 321 of the upper ring 303 as the spring receiving member.

In the case of the dental handpiece 300 according to the third embodiment, the rolling bearing 61 can be actively cooled by causing the cooling air to flow through the flow path R5 formed by the side slits 313 of the lower ring 301. Thus, the temperature increase of the head portion 11 due to heat conduction from the outer ring 65 of the rolling bearing 61 can be suppressed.

### (Modification)

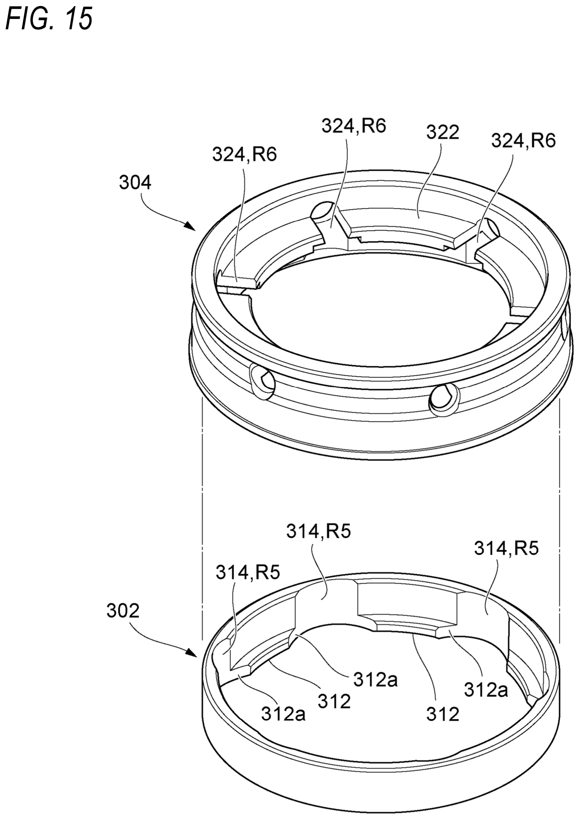

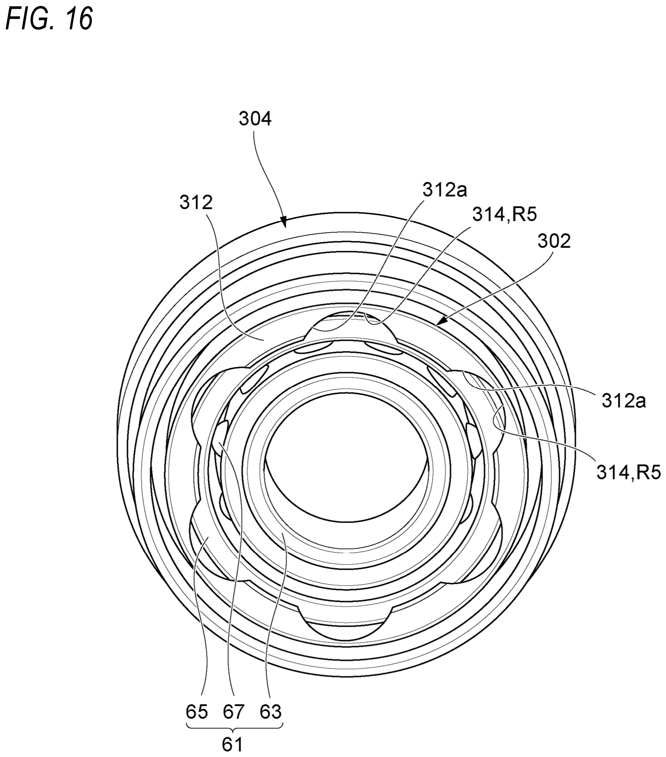

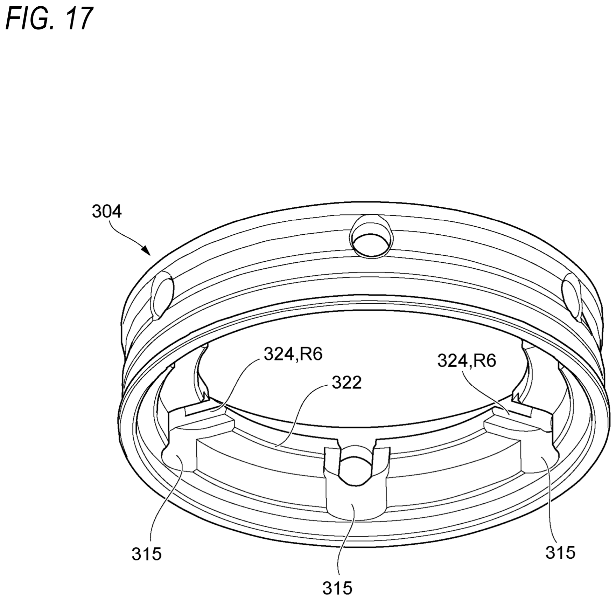

FIG. 15 is an exploded perspective view of a lower ring 302 and an upper ring 304 according to a modification of the dental handpiece 300 of the third embodiment. FIG. 16 is a perspective view, viewed from below, showing a state in which the rolling bearing 61 is sandwiched between the lower ring 302 and the upper ring 304. FIG. 17 is a perspective view of the upper ring 304 viewed from below. Except for the shapes of the lower ring 302 and the upper ring 304, the dental handpiece of this modification has the same configuration as the dental handpiece 300 according to the third embodiment described above.

As shown in FIGS. 15 and 16, the lower ring 302 has, at a lower end thereof, a lower flange portion 312 projecting radially inward and abutting a lower end face on a lower side of the outer ring 65 of the rolling bearing 61. On an inner peripheral surface of the lower ring 302, a plurality of side slits 314 made of recessed grooves to reduce thickness in the radial direction are formed. These side slits 314 extend in the up-down direction from the lower flange portion 312 at the lower end to an upper end, and are provided at a plurality of positions with intervals in the circumferential direction. These side slits 314 constitute a flow path (axial ventilation path) R5 between the side slits 314 and the outer peripheral surface of the outer ring 65, and the size of the flow path R5 is larger than in the case of the side slits 313 of the lower ring 301 described above.

As shown in FIGS. 15 and 17, the upper ring 304 has, at an upper end thereof, an upper flange portion 322 serving as a spring receiving portion projecting radially inward. A biasing spring 43 is disposed on an upper surface of the upper flange portion 322, and an upper end face on an upper side of the outer ring 65 abuts a lower surface of the upper flange portion 322. On the lower surface of the upper flange portion 322, ventilation slits 324 communicating radially inward and outward are formed at a plurality of positions along the radial direction. These ventilation slits 324 constitute a flow path (radial ventilation path) R6 along the radial direction at the upper end face on the upper side of the outer ring 65. Further, side slits 315 made of recessed grooves extending from the upper flange portion 322 to a lower end of the upper ring 304 are respectively formed below the ventilation slits 324. These side slits 315 constitute a flow path (axial ventilation path) between the side slits 315 and the outer peripheral surface of the outer ring 65.

The upper flange portion 322 of the upper ring 304 and the lower flange portion 312 of the lower ring 302 sandwich the outer ring 65 between the flanges, thereby increasing a fixing strength of the outer ring 65. As a result, the rolling bearing 61 that rotates at high speed is firmly supported, and product strength and stability during use can be improved. Note that a distance between a lower surface of the upper ring 304 and an upper surface of the lower ring 302 is longer than a width of the outer ring 65, and a continuous annular gap along the circumferential direction of the lower ring 302 is formed between the above-mentioned lower surface and upper surface on the outer peripheral surface of the outer ring 65. That is, an annular gap along the circumferential direction is formed between the spring receiving member 303 constituting the housing and the lower ring 302. This annular gap is connected to the ventilation slits 324 of the upper ring 304. Accordingly, the cooling air flows through the axial ventilation path of the lower ring 302 into the annular gap and diffuses in the annular gap. Further, the diffused cooling air is discharged to the outside through the side slits (axial ventilation paths) 315 of the upper ring 304 and the ventilation slits (radial ventilation paths) 324 of the upper ring 304. In this way, since the cooling air passes while diffusing over a wide range without locally passing over the surface of the outer ring 65, a high cooling effect can be obtained.

### (Fourth Embodiment)

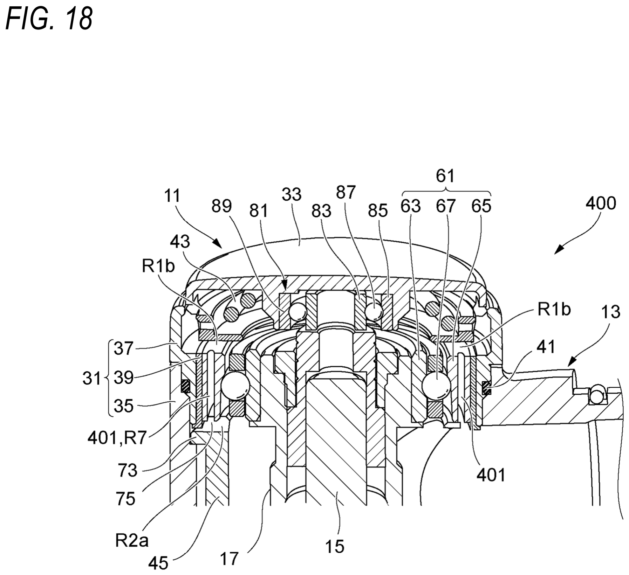

FIG. 18 is a schematic cross-sectional view, taken along an axial direction, of the head portion 11 of a dental handpiece 400 according to a fourth embodiment. In the dental handpiece 400 according to the fourth embodiment shown in FIG. 18, the outer ring 65 of the rolling bearing 61 has internal through-holes 401. The internal through-holes 401 are through-holes formed along the up-down direction, and are provided at a plurality of positions at intervals in the circumferential direction. The internal through-holes 401 constitute a flow path (axial ventilation path) R7. Preferably, the internal through-holes 401 are arranged at equal intervals in the circumferential direction.

In this dental handpiece 400, the cooling air flowing upward in the head portion 11 passes through the flow path R2a constituted by the ventilation grooves 111 (FIG. 6) formed in the lower flange portion 73 of the bearing retainer member 45, and the flow path R7 constituted by the internal through-holes 401 formed in the outer ring 65, and is discharged to an outer circumferential side at an upper portion of the outer ring 65.

Further, a part of the cooling air flowing upward in the head portion 11 passes between the inner ring 63 and the outer ring 65 of the rolling bearing 61 toward an upper end side of the rolling bearing 61, and is discharged to an outer circumferential side at an upper portion of the outer ring 65 through the flow path R1b constituted by the ventilation slits 107 (FIG. 6) formed in the upper flange portion 105 of the spring receiving member 39.

Thus, according to the dental handpiece 400 of the fourth embodiment, the rolling bearing 61 can be actively cooled by causing the cooling medium such as the cooling air to flow through the flow path R7 constituted by the internal through-holes 401 formed in the outer ring 65. Accordingly, a temperature increase of the head portion 11 due to heat conduction from the outer ring 65 of the rolling bearing 61 can be suppressed.

The present disclosure is not limited to the above embodiments, and the respective configurations of the embodiments may be combined with each other, and modifications and applications made by those skilled in the art based on the description of the specification and well-known techniques are also intended and fall within the scope of protection.

Further, in the above-described embodiments, in addition to suppressing a temperature increase of the head portion by the flow of the cooling medium, other effects accompanying the flow of the cooling medium can be obtained. For example, in a dental handpiece, oil or the like may be supplied after washing and disinfection treatment. However, if oil remains inside the handpiece, it may cause heat generation during use. According to the present configuration, such excess oil can be efficiently discharged, and even when a step of discharging excess oil at the time of maintenance is not performed, an effect of discharging excess oil by the cooling air during use can be enhanced. That is, the dental handpiece of the present configuration is also excellent in an effect of discharging unnecessary substances (such as oil and dust) existing in the flow path, and can further improve convenience during use.

### (Fifth Embodiment)

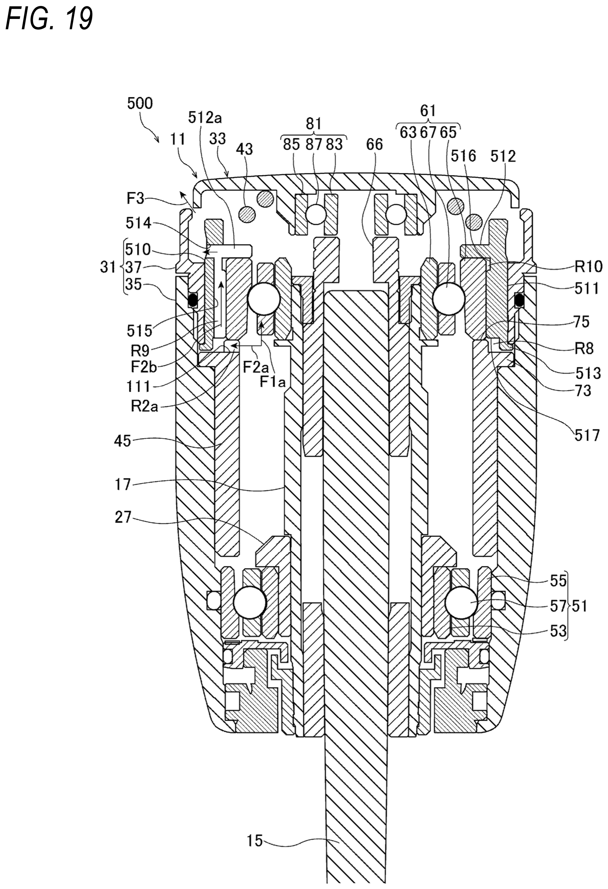

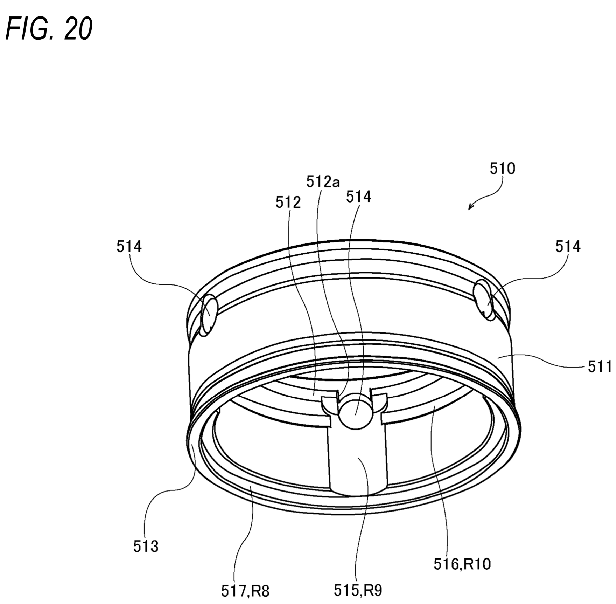

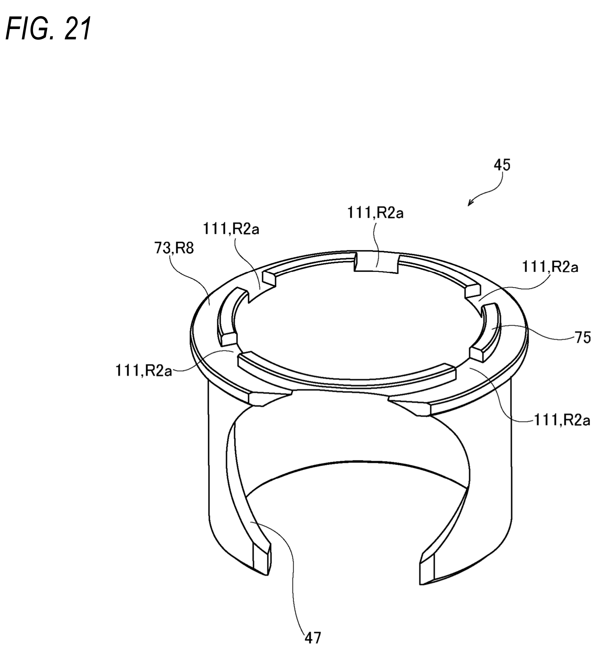

Next, with reference to FIGS. 19 to 21, points different from the above-described examples will be described in connection with a dental handpiece according to a fifth embodiment. FIG. 19 is a schematic cross-sectional view, taken along an axial direction, of a head portion of a dental handpiece according to the fifth embodiment. FIG. 20 is a bottom perspective view showing a spring receiving member. FIG. 21 is a top perspective view of a bearing retainer member.

The dental handpiece 500 according to the fifth embodiment shown in FIG. 19 includes a spring receiving member 510 constituting a part of the housing 31, and a tubular bearing retainer member 45 fixed inside the housing main body 35.

Flow paths R2a, R8, R9, and R10 are formed by the spring receiving member 510 and the bearing retainer member 45 so that a part of the cooling air supplied to the inside of the bearing retainer member 45 of the head portion 11 flows upward along the outer peripheral surface of the outer ring 65. This configuration is illustrated in FIG. 19.

The spring receiving member 510 includes a cylindrical ring portion 511, an upper flange portion 512 projecting radially inward at an upper portion of the ring portion 511, an annular locking piece 513 projecting radially outward from an outer peripheral surface of a lower end portion of the ring portion 511, a ventilation hole 514, an up-down groove portion 515, an annular groove portion 516, and an annular stepped portion 517. This configuration is illustrated in FIGS. 19 and 20.

The spring receiving member 510 is attached to the head portion 11 by inserting the ring portion 511 into the head cap 37 from a lower side of the head cap 37 on an inner peripheral side until the locking piece 513 is locked to a lower end of the head cap 37. A lower end of the ring portion 511 is placed on an upper surface of the bearing retainer member 45.

The outer ring 65 of the rolling bearing 61 is fitted into an inner peripheral side of the ring portion 511, and an upper end face of the outer ring 65 abuts a lower surface of the upper flange portion 512.

The ventilation holes 514 are through-holes penetrating the ring portion 511 in the radial direction, and are provided in a plurality of positions at intervals along the circumferential direction of the ring portion 511. In the example shown in FIG. 20, three ventilation holes 514 are arranged at equal intervals along the circumferential direction of the ring portion 511. The number of ventilation holes 514 is not limited to three.

Further, in the up-down direction, the ventilation holes 514 are provided on a lower side of the upper flange portion 512. Accordingly, annular notches 512a are formed in portions of the upper flange portion 512 where the ventilation holes 514 are formed.

The up-down groove portions 515 are grooves recessed in the inner peripheral surface of the ring portion 511 and extend in the up-down direction from the lower end portion of the ring portion 511 to positions connected to the ventilation holes 514. The up-down groove portions 515 are provided in a plurality of positions corresponding to the ventilation holes 514. Therefore, in this embodiment, three up-down groove portions 515 are formed corresponding to the three ventilation holes 514. The number of up-down groove portions 515 is not limited to three, and they need not necessarily be connected to the ventilation holes 514. For example, the up-down groove portions 515 may be configured to be connected to the ventilation holes 514 via the annular groove portion 516.

The annular groove portion 516 is a groove recessed annularly along the circumferential direction on an upper inner peripheral surface of the ring portion 511, and is formed so as to connect lower half portions of the plurality of ventilation holes 514 disposed on the inner peripheral surface of the ring portion 511. Accordingly, the annular groove portion 516 is provided on a lower side of the upper flange portion 512.

The annular stepped portion 517 is an annular stepped portion formed by notching an inner peripheral surface side of a lower end portion of the ring portion 511.

The bearing retainer member 45 is a tubular member having, on an outer peripheral surface thereof, the opening 47 that communicates with the insertion passage 21 of the grip portion 13, a lower flange portion 73 projecting radially outward at an upper portion, and the annular protruding portion 75 projecting upward at a radially inner side of the lower flange portion 73.

A plurality of ventilation grooves 111 are formed in the annular protruding portion 75 along the radial direction. The ventilation grooves 111 constitute the flow path (radial ventilation path) R2a along the radial direction at the lower end face of the outer ring 65.

The annular protruding portion 75 has a smaller diameter than the ring portion 511 and abuts the lower end face of the outer ring 65 of the rolling bearing 61. The rolling bearing 61 is sandwiched in the up-down direction by the upper flange portion 512 of the spring receiving member 510 and the annular protruding portion 75 of the bearing retainer member 45.

According to the above configuration, when a lower end portion of the ring portion 511 of the spring receiving member 510 is placed on the lower flange portion 73 of the bearing retainer member 45, an annular flow path R8 is formed by the lower flange portion 73, the annular protruding portion 75, and the annular stepped portion 517.

Further, a flow path R9 extending in the up-down direction is formed between the up-down groove portions 515 of the spring receiving member 510 and the outer peripheral surface of the outer ring 65.

Furthermore, an annular flow path R10 is formed between the annular groove portion 516 of the spring receiving member 510 and the outer peripheral surface of the outer ring 65. This configuration is illustrated in FIGS. 19 to 21.

In the dental handpiece 500 having this configuration, as shown in FIG. 19, a part of the cooling air supplied to the inside of the bearing retainer member 45 of the head portion 11 first flows, through the flow path R2a formed by the ventilation grooves 111 of the annular protruding portion 75, into the annular flow path R8 formed by the annular stepped portion 517 and the like.

The cooling air that has flowed into the annular flow path R8 formed by the annular stepped portion 517 and the like flows annularly and diffuses along the circumferential direction at a lower end portion of the outer peripheral surface of the outer ring 65, so that a lower portion of the outer ring 65 can be efficiently cooled.

The cooling air flowing through the flow path R8 flows, through the flow path R9 along the up-down groove portions 515, toward the annular flow path R10 formed by the annular groove portion 516 at an upper portion of the outer ring 65.

The cooling air that has flowed into the annular flow path R10 formed by the annular groove portion 516 flows annularly and diffuses along the circumferential direction at an upper end portion of the outer peripheral surface of the outer ring 65, so that an upper portion of the outer ring 65 can be efficiently cooled.

The cooling air that has flowed to the flow path R10 formed by the annular groove portion 516 is discharged to a radially outer side of the spring receiving member 510 through the ventilation holes 514.

Thus, with a small number of components, the flow paths R8, R9, and R10, through which a part of the cooling air supplied to the inside of the bearing retainer member 45 of the head portion 11 flows upward along the outer peripheral surface of the outer ring 65, can be formed. Further, since the cooling air can be caused to flow annularly and diffuse along the outer peripheral surface of the outer ring 65 at the lower and upper end portions of the outer ring 65, a cooling efficiency of the outer ring 65 is improved.

As described above, the present specification discloses the following aspects.
(1) A dental handpiece including a bur sleeve that detachably holds a dental treatment tool; and a head portion that rotationally drives the bur sleeve about a central axis of the dental treatment tool,
   wherein the bur sleeve is rotatably supported in a housing of the head portion via a rolling bearing,
   wherein the rolling bearing includes an inner ring that supports the bur sleeve, an outer ring that is fixed to the housing, and a plurality of rolling elements disposed between the inner ring and the outer ring, and
   wherein a flow path of a cooling medium that communicates in an axial direction is provided on an outer circumferential surface of the outer ring or inside the outer ring.

According to this dental handpiece, since a flow path of the cooling medium is provided in the outer ring of the rolling bearing that rotatably supports the dental treatment tool via the bur sleeve, the outer ring of the rolling bearing rotating at high speed can be actively cooled. Accordingly, a temperature increase of the head portion due to heat conduction from the rolling bearing can be suppressed.

(2) The dental handpiece according to (1), wherein the flow path includes a side slit provided in the housing to form, along the axial direction, a space in which the cooling medium flows.

According to this dental handpiece, the flow path can be easily configured on an outer circumferential side of the outer ring by fitting the outer ring of the rolling bearing into the housing having the side slit.

(3) The dental handpiece according to (2), wherein the side slits are provided at a plurality of positions spaced apart in a circumferential direction of the outer ring.

According to this dental handpiece, by causing the cooling medium to flow through a flow path constituted by a plurality of side slits provided in the housing at intervals in the circumferential direction of the outer ring, the outer ring can be uniformly cooled, and a temperature increase of the head portion can be suppressed.

(4) The dental handpiece according to any one of (1) to (3), wherein the housing has upper flange portions projecting radially inward at a plurality of positions along a circumferential direction of the outer ring,
wherein the plurality of upper flange portions abut an upper end face of the outer ring, and a plurality of radial ventilation paths communicating in a radial direction along the upper end face of the outer ring are configured between adjacent upper flange portions in the circumferential direction.

According to this dental handpiece, the upper end face of the outer ring can be cooled by the cooling medium flowing through the radial ventilation paths.

(5) The dental handpiece according to any one of (1) to (4), further comprising a bearing retainer member fixed to an inner peripheral surface of the housing and having an annular protruding portion that supports a lower end face of the outer ring,
wherein the annular protruding portion is configured with a plurality of radial ventilation paths communicating in a radial direction along the lower end face of the outer ring.

According to this dental handpiece, since the plurality of radial ventilation paths are configured in the annular protruding portion of the bearing retainer member, a lower end face of the outer ring can be cooled.

(6) The dental handpiece according to any one of (1) to (4), further comprising a bearing retainer member fixed to an inner peripheral surface of the housing, and a lower ring fixed to the bearing retainer member and having a lower flange portion projecting radially inward to support a lower end face of the outer ring,
wherein the lower ring is configured with a plurality of axial ventilation paths communicating in the axial direction along an outer peripheral surface of the outer ring.

According to this dental handpiece, the outer peripheral surface of the outer ring can be cooled by the axial ventilation paths configured in the lower ring.

(7) The dental handpiece according to (6), wherein an annular gap along a circumferential direction of the lower ring is configured between the housing and the lower ring, and
wherein the annular gap is connected to the axial ventilation paths of the lower ring.

According to this dental handpiece, the cooling air that has passed through the axial ventilation paths of the lower ring flows into the annular gap and diffuses in the annular gap. Thus, the cooling effect of the outer ring can be further improved.

(8) The dental handpiece according to (1), wherein the flow path is an outer ring groove portion configured on the outer peripheral surface of the outer ring so as to communicate in the axial direction.

According to this dental handpiece, the outer ring can be cooled by the cooling medium flowing through the outer ring groove portion configured on the outer peripheral surface of the outer ring.

(9) The dental handpiece according to (1), wherein the outer ring has an internal through-hole configured to penetrate in the axial direction and through which the cooling medium flows.

According to this dental handpiece, the outer ring can be cooled by the cooling medium flowing through the internal through-hole.

(10) The dental handpiece according to (1), further comprising a spring receiving member fixed to the inner peripheral surface of the housing,
wherein the spring receiving member includes a cylindrical ring portion whose inner peripheral surface is fitted with the outer ring, and an upper flange portion projecting radially inward to support an upper end face of the outer ring, and
wherein the ring portion has the ventilation hole penetrating in the radial direction and the up-down groove portion recessed in the inner peripheral surface along the axial direction in the up-down direction and connected to the ventilation hole.

According to this dental handpiece, the flow path can be easily configured on an outer circumferential side of the outer ring by fitting the outer ring into the spring receiving member having the up-down groove portion.

(11) The dental handpiece according to (10), wherein the up-down groove portions are provided at a plurality of positions spaced apart in a circumferential direction of the ring portion.

According to this dental handpiece, since the outer ring can be uniformly cooled by causing the cooling medium to flow through flow paths constituted by a plurality of up-down groove portions provided at intervals in the circumferential direction of the outer ring, a temperature increase of the head portion can be suppressed.

(12) The dental handpiece according to (10) or (11), wherein the ring portion has an annular groove portion recessed in the inner peripheral surface along the circumferential direction, and
wherein the annular groove portion is configured so as to connect the ventilation holes arranged in a plurality along the circumferential direction of the ring portion.

According to this dental handpiece, the outer ring can be cooled by the cooling medium flowing through the annular groove portion configured on an upper portion of the outer peripheral surface of the outer ring.

(13) The dental handpiece according to any one of (10) to (12), wherein the housing includes a bearing retainer member fixed to the inner peripheral surface,
wherein the bearing retainer member has an annular lower flange portion that supports a lower end face of the ring portion and an annular protruding portion that supports a lower end face of the outer ring, and
wherein an annular flow path is configured by the annular stepped portion extending along an inner peripheral surface of a lower end portion of the ring portion, the lower flange portion, and the annular protruding portion.

According to this dental handpiece, the outer ring can be cooled by the cooling medium flowing through the annular flow path configured at a lower portion of the outer peripheral surface of the outer ring.

## Claims

1. A dental handpiece comprising
a bur sleeve that detachably holds a dental treatment tool; and
a head portion that rotationally drives the bur sleeve about a central axis of the dental treatment tool,
wherein the bur sleeve is rotatably supported in a housing of the head portion via a rolling bearing,
wherein the rolling bearing includes an inner ring that supports the bur sleeve, an outer ring that is fixed to the housing, and a plurality of rolling elements disposed between the inner ring and the outer ring, and
wherein a flow path of a cooling medium that communicates in an axial direction is provided on an outer circumferential surface of the outer ring or inside the outer ring.

2. The dental handpiece according to claim 1,
wherein the flow path includes a side slit provided in the housing to form, along the axial direction, a space in which the cooling medium flows.

3. The dental handpiece according to claim 2,
wherein the side slits are provided at a plurality of positions spaced apart in a circumferential direction of the outer ring.

4. The dental handpiece according to claim 1,
wherein the housing has upper flange portions projecting radially inward at a plurality of positions along a circumferential direction of the outer ring, and
wherein the plurality of upper flange portions abut an upper end face of the outer ring, and a plurality of radial ventilation paths communicating in a radial direction along the upper end face of the outer ring are configured between adjacent upper flange portions in the circumferential direction.

5. The dental handpiece according to any one of claims 1 to 4, further comprising a bearing retainer member fixed to an inner peripheral surface of the housing and having an annular protruding portion that supports a lower end face of the outer ring,
wherein the annular protruding portion is configured with a plurality of radial ventilation paths communicating in a radial direction along the lower end face of the outer ring.

6. The dental handpiece according to any one of claims 1 to 4, further comprising a bearing retainer member fixed to an inner peripheral surface of the housing, and a lower ring fixed to the bearing retainer member and having a lower flange portion projecting radially inward to support a lower end face of the outer ring,
wherein the lower ring is configured with a plurality of axial ventilation paths communicating in the axial direction along an outer peripheral surface of the outer ring.

7. The dental handpiece according to claim 6,
wherein an annular gap along a circumferential direction of the lower ring is configured between the housing and the lower ring, and
wherein the annular gap is connected to the axial ventilation paths of the lower ring.

8. The dental handpiece according to claim 1,
wherein the flow path is an outer ring groove portion configured on the outer peripheral surface of the outer ring so as to communicate in the axial direction.

9. The dental handpiece according to claim 1,
wherein the outer ring has an internal through-hole configured to penetrate in the axial direction and through which the cooling medium flows.

10. The dental handpiece according to claim 1, further comprising a spring receiving member fixed to an inner peripheral surface of the housing,
wherein the spring receiving member includes a cylindrical ring portion whose inner peripheral surface is fitted with the outer ring, and an upper flange portion projecting radially inward to support an upper end face of the outer ring, and
wherein the ring portion has the ventilation hole penetrating in the radial direction and the up-down groove portion recessed in the inner peripheral surface along the axial direction in the up-down direction and connected to the ventilation hole.

11. The dental handpiece according to claim 10,
wherein the up-down groove portions are provided at a plurality of positions spaced apart in a circumferential direction of the ring portion.

12. The dental handpiece according to claim 10,
wherein the ring portion has an annular groove portion recessed in the inner peripheral surface along the circumferential direction, and
wherein the annular groove portion is configured so as to connect the ventilation holes arranged in a plurality along the circumferential direction of the ring portion.

13. The dental handpiece according to any one of claims 10 to 12,
wherein the housing includes a bearing retainer member fixed to the inner peripheral surface,
wherein the bearing retainer member has an annular lower flange portion that supports a lower end face of the ring portion and an annular protruding portion that supports a lower end face of the outer ring, and
wherein an annular flow path is configured by the annular stepped portion extending along an inner peripheral surface of a lower end portion of the ring portion, the lower flange portion, and the annular protruding portion.
